# EUROPEAN PATENT APPLICATION

(11) **EP 4 485 753 A1**
(43) Date of publication of application: **01.01.2025**
(21) Application number: 23306032.6
(22) Date of filing: 27.06.2023
(51) Int. Cl.: H02K 1/14, H02K 1/18, H02K 21/18, H02K 29/03

(54) **SINGLE-PHASE SYNCHRONOUS MOTOR AND PUMP COMPRISING A SYNCHRONOUS MOTOR**

(71) Applicant: WILO SE, 44263 Dortmund (DE)
(72) Inventor: BOULET, Thomas, 44263 Dortmund (DE); MAES, Sylvere, 44263 Dortmund (DE); RÉAUTEZ, Vincent, 44263 Dortmund (DE); BOUTTIER, Louis, 44263 Dortmund (DE)
(74) Representative: Schwöbel, Thilo K.

(57) **Abstract**

The invention relates to a single-phase synchronous motor comprising at least one stator winding, a U-shaped laminated stator core with two poles and a rotor, the rotor being arranged between the poles and the rotor comprising a rotor permanent magnet, characterized in that the motor comprises a magnetic means support, wherein the magnetic means support comprises at least a first part and a second part, the first and second part being located between the poles, at diametrically opposed locations relative to the axis of rotation of the rotor, and radially distanced to the rotor permanent magnet, wherein the first part realizes or is configured to realize a first magnetic moment and the second part realizes or is configured to realize a second magnetic moment, wherein the first and second magnetic moments are oriented parallel to each other.

## Description

The present invention relates a single-phase synchronous motor comprising at least one stator winding, a U-shaped laminated stator core with two poles and a rotor, the rotor being arranged between the poles and the rotor comprising a rotor permanent magnet.

Furthermore, the present invention relates to a pump comprising a synchronous motor according to the present invention.

### BACKGROUND OF THE INVENTION

Single-phase synchronous motors are well known and are nowadays used in particular as drives, e.g., for pumps, especially water pumps.
When an equal number of magnetic poles are formed in the stator and in the rotor, a force is exerted on the rotor which results in a fluctuating torque over one rotor revolution. This causes uneven running, especially at low speeds. In single-phase, two-pole motors, there are two positions per rotor revolution in which no electrical torque is generated, i.e. no torque acting on the permanent-magnet rotor as a result of the current flowing through the stator windings and the force of the resulting magnetic field. These two positions correspond to those angular positions of the rotor in which the north and south poles of the rotor are aligned with the pole legs and the pole shoes, respectively, i.e. are "in-line" with them. This is the case for the angular positions 90° and 270°. These angular positions represent rest positions, also called lock positions, because no torque acts on the rotor in these positions. After switching off, the motor remains in one of the two rest positions.
Hence, starting the motor from one of these positions is difficult in that in these angular positions no torque is generated by electrical activation of the stator windings, i.e. no starting torque is generated, so that the rotor cannot accelerate and consequently the motor does not start. The same is true in case that the rotor is in an angular position close to one of the lock or rest positions, as no starting can occur if the static frictional torque is greater than the starting torque.

In order to ensure a start-up, it is known to use synchronous motors with an asymmetry in the laminated section in the form of an arcuate recess in the pole arcs of the pole legs or pole shoes, the recesses especially being diametrically opposed and offset by an angle to the plane of symmetry in which the stator poles lie. Furthermore, it is known to use either a single magnetic means or several magnetic means that are not diametrically opposed to each other (hence, in case of an even number of magnetic means, such magnetic means are not symmetrically distributed along the circumference of the motor bore). Such arrangements cause a change in the cogging torque such that, in case that the supply voltage is switched off, the rotor remains in a rest position in which sufficient electrical torque is able to be generated when the rotor is restarted.

The arrangement of a single magnetic means, or the arrangement of several magnetic means which are not diametrically opposed to each other, in the case of an even number of magnetic means thus not symmetrically distributed along the circumference of the motor bore, cause such a change in the cogging torque that it no longer has half the period of the electric torque with respect to a full rotor revolution, but the same period as the electric torque. This is achieved by shifting the zero crossings of the cogging torque in the area of the rotor positions corresponding to the natural rest positions for the lower and upper half of the rotor circumference in opposite directions. This in turn has the effect that when the supply voltage is switched off, the rotor remains in a rest position in which sufficient electrical torque is generated when the rotor is restarted.
However, the use of an asymmetrical arrangement or setup of the magnetic means (either using one magnetic means or a plurality thereof that are not diametrically opposed to each other) leads to high bearing system wear.

### SUMMARY OF THE INVENTION

An object of the present invention is to provide a technically simple, effective and cost-effective solution for providing a single-phase synchronous motor in a manner such that - when the supply voltage is switched off - the rotor remains in a rest position in which sufficient electrical torque is generated when the rotor is restarted. A further object of the present invention is to provide a corresponding pump comprising a synchronous motor according to the present invention, especially for hydraulic systems and especially for pumping water.

The object of the present invention is achieved by a single-phase synchronous motor comprising at least one stator winding, a U-shaped laminated stator core with two poles and a rotor, the rotor being arranged between the poles and the rotor comprising a rotor permanent magnet, wherein the motor comprises a magnetic means support, wherein the magnetic means support comprises at least a first part and a second part, the first and second part being located between the poles, at diametrically opposed locations relative to the axis of rotation of the rotor, and radially distanced to the rotor permanent magnet, wherein the first part realizes or is configured to realize a first magnetic moment and the second part realizes or is configured to realize a second magnetic moment, wherein the first and second magnetic moments are oriented parallel to each other.

It is thereby advantageously possible according to the present invention to both reduce the wear of the bearing system, i.e. provide an increased product lifetime while nevertheless realize a comparatively high electrical starting torque of the motor. Hence, it is advantageously possible to provide a (starting) torque improvement without jeopardizing the product lifetime of the motor by means of introducing additional radially acting forces (unbalanced loads) due to unsymmetrically distributed magnetic means.

According to the present invention, the single-phase synchronous motor comprises at least one stator winding, a U-shaped laminated stator core with two poles as well as a rotor. The rotor is arranged between the poles and comprises a rotor permanent magnet. The motor according to the present invention comprises a magnetic means support that comprises at least a first part and a second part, wherein the first and second part are located
-- between the poles,
-- at diametrically opposed locations relative to the axis of rotation of the rotor, and
-- radially distanced to the rotor permanent magnet,
wherein the first part realizes or is configured to realize a first magnetic moment and the second part realizes or is configured to realize a second magnetic moment, wherein the first and second magnetic moments are oriented parallel to each other, i.e. aligned and directed in the same direction.

Especially, the magnetic means are realized using two permanent magnets (e.g. sintered ferrite, anisotropic) imbedded into an overmolded part (magnetic means support) to ensure the correct positioning of the magnets compared with the rotor (as any misalignment would generate some unbalanced loads).

By means of realizing the magnetic means support as an axially mountable element of the motor, especially the stator configuration of the motor, it is advantageously possible, according to the present invention, to provide for an eased assembly and production of the motor.
Alternatively or cumulatively to using two permanent magnets embedded into an overmolded part (magnetic means support), it is also possible and preferred, according to the present invention, to provide other means such as an auxiliary winding (i.e. the magnetic means support comprising, in or as part of its first part, a first coil, and, in or as part of its second part, a second coil), which auxiliary winding is especially powered only during the start-up phase of the motor or a single magnet that moves away from the rotor once it reaches full speed.

According to the present invention, it is advantageously furthermore possible and preferred that the absolute value of the first magnetic moment and of the second magnetic moment are equal,
wherein especially the absolute value of the first and second magnetic moments correspond to between 10% and 30% of the magnetic moment of the rotor permanent magnet, preferably between 15% and 25% of the magnetic moment of the rotor permanent magnet.

It is thereby advantageously possible to realize and implement the inventive method in a comparatively simple and efficient manner.

According to the present invention, it is furthermore advantageously possible and preferred that the magnetic means support comprises, in or as part of its first part, a first permanent magnet having the first magnetic moment, and, in or as part of its second part, a second permanent magnet having the second magnetic moment, wherein especially the first and second permanent magnets and/or the first and second parts are configured
-- to have a height in axial direction substantially corresponding to the length of the rotor permanent magnet and/or
-- to have a width in angular direction of at most 60 degrees, preferably at most 45 degrees, further preferably at most 30 degrees,
and/or wherein especially the first and second permanent magnets and/or the first and second parts are realized of, or comprise, sintered hard ferrite.

It is thereby advantageously possible to realize and implement the inventive method in a comparatively simple and efficient manner.

According to the present invention, it is furthermore advantageously possible and preferred that the magnetic means support comprises, in or as part of its first part, a first coil, and, in or as part of its second part, a second coil, wherein the motor comprises or is assigned to control means such that the first coil is able to be controlled such as to realize the first magnetic moment and the second coil is able to be controlled such as to realize the second magnetic moment.

It is thereby advantageously possible to realize and implement the inventive method in a comparatively simple and efficient manner.

Furthermore, it is advantageously possible and preferred according to the present invention that the magnetic means support is a molded part, wherein the first and second permanent magnets and/or the first and second coils are especially arranged as part of the magnetic means support by means of over-molding and/or by means or insert-molding.

It is thereby advantageously possible to realize and implement the inventive method in a comparatively simple and efficient manner.

Furthermore, it is advantageously possible and preferred according to the present invention that the magnetic means support is a molded part
-- made of a material having magnetic properties or
-- made of a material comprising particles having magnetic properties.

It is thereby advantageously possible to realize and implement the inventive method in a comparatively simple and efficient manner.

Furthermore, it is advantageously possible and preferred according to the present invention that the rotor has, relative to the stator core, at least one angular position of minimum torque of the motor, wherein the motor is configured such that any position of rest of the rotor is angularly distanced from any such angular position of minimum torque of the motor by at least 20 degrees, preferably by at least 30 degrees, more preferably by at least 40 degrees.

It is thereby advantageously possible to realize and implement the inventive method in a comparatively simple and efficient manner.

Furthermore, the present invention relates to a pump comprising a synchronous motor according to the present invention.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWING

Figure 1 schematically illustrates, in a perspective view, an inventive electrical motor as a single-phase synchronous motor as part of an assembly with a pump or pump element.
Figure 2 schematically illustrates, likewise in a perspective view, the inventive electrical motor in greater detail, specifically showing the two poles, the rotor, and the magnetic means support.
Figures 3 and 4 schematically illustrate two identical representations of the magnetic means support, especially the magnetic means support comprising a first part and a second part, the first and second part being located between the poles, at diametrically opposed locations relative to the axis of rotation.
Figure 5 schematically illustrates a top view (or, rather, a sectional view with a sectional plane perpendicular to the axis of rotation) of the inventive electrical motor.
Figure 6 schematically illustrates the evolution, depending on the rotation angle around the axis of rotation, of the electrical torque and the evolution of the cogging torque of a motor according to the present invention.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

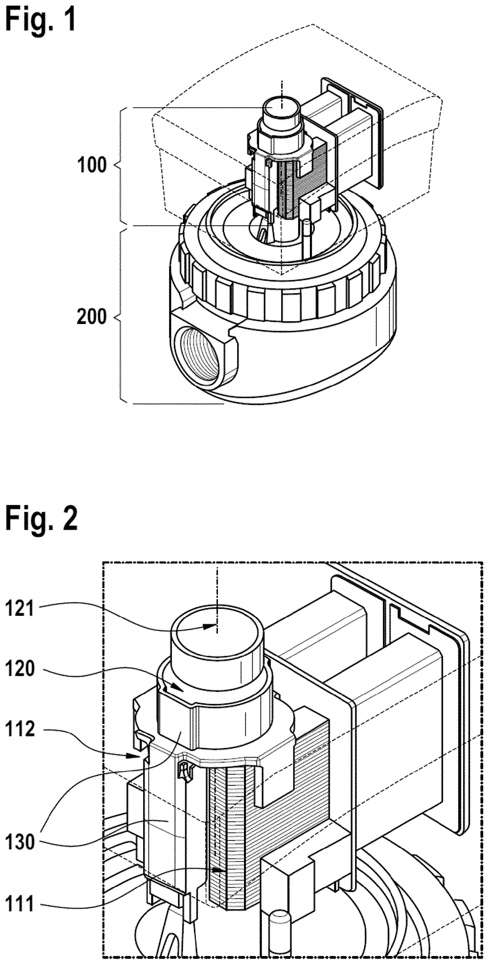

In Figure 1, a perspective view of an inventive electrical motor - as a single-phase synchronous motor - is schematically represented illustrated. Figure 1 shows the inventive electrical motor as part of an assembly with a pump or pump element: In an upper part of Figure 1, the electric motor 100 is schematically represented, and in a lower part of Figure 1, the pump 200 (or pump unit 200) is schematically shown. Especially, the electric motor 100 has an axis of rotation, and the pump 200 - as a rotational pump, i.e. also having an axis of rotation - is aligned (in the lower part of Figure 1) along the axis of rotation of the electric motor 100.

Figure 2 schematically illustrates, likewise in a perspective view, the inventive electrical motor in greater detail.
As is generally known for single-phase synchronous motors, the electric motor 100 comprises a stator and a rotor 120.
Especially according to the present invention, the stator has a U-shaped laminated stator core having two poles 111, 112, the laminated stator core having - or, being arranged with - at least one stator winding. The rotor 120 - having, or defining, an axis of rotation 121 - is arranged between the poles 111, 112 of the stator core and the rotor 120 comprises a rotor permanent magnet (not specifically shown in Figure 2).
Figure 2 furthermore shows a magnetic means support 130. The magnetic means support 130 is shown fixed (or attached) to the stator (or, to the stator core, especially in the area of the poles 111, 112 of the stator core). The magnetic means support 130 is especially fixed or attached to the stator by means of mounting it substantially axially - along the axis of rotation 121.

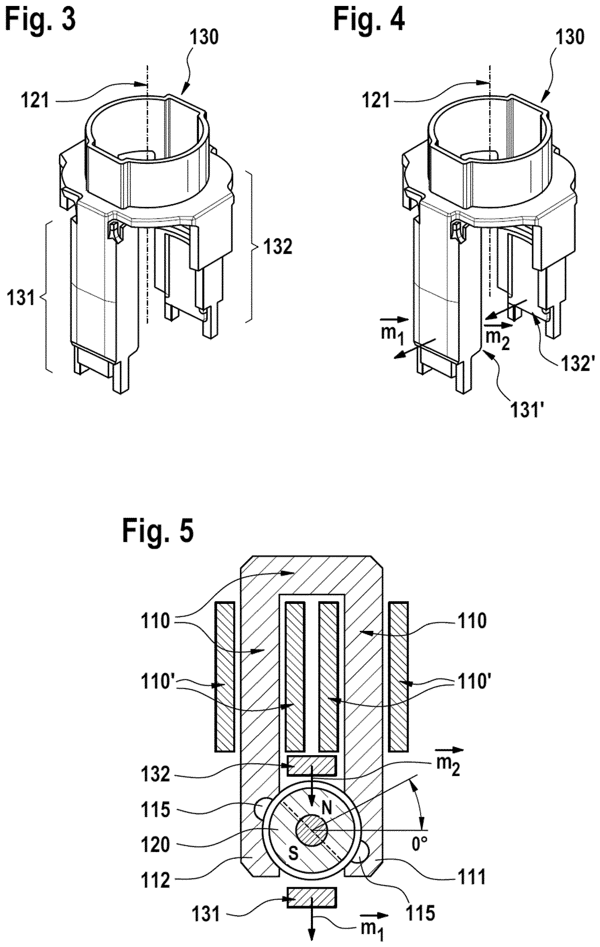

Figures 3 and 4 schematically illustrate two identical representations (perspective views) of the magnetic means support 130: According to the present invention, the magnetic means support 130 comprises a first part 131 and a second part 132 (cf. Figure 3).
In assembled state of the magnetic means support 130, the first and second parts 131, 132 are located between the poles 111, 112 of the stator core (however, the stator core is not shown in Figure 3). Furthermore, the first and second parts 131, 132 of the magnetic means support 130 are located at diametrically opposed locations relative to the axis of rotation 121. Furthermore, the first and second parts 131, 132 of the magnetic means support 130 are radially distanced to the rotor permanent magnet (this is likewise not shown in Figure 3).

As can be seen from Figure 4, the first part 131 of the magnetic means support 130 realizes (or is configured to realize) a first magnetic moment m₁ and the second part 132 realizes (or is configured to realize) a second magnetic moment m₂, wherein the first and second magnetic moments m₁, m₂ are oriented parallel to each other, i.e. aligned and directed in the same direction; this is schematically shown, in Figure 4, by means of vector representations of the magnetic moments m1 and m2.

Figure 5 schematically illustrates a top view (or, rather, a sectional view with a sectional plane perpendicular to the axis of rotation 121) of the inventive electrical motor. From the sectional view of Figure 5, the U-shaped laminated stator core 110 is visible. The U-shaped laminated stator core 110 comprises two legs, the respective ends of which (or, the respective end parts) are forming the poles 111, 112 of the stator 110 or stator core 110.

The U-shaped laminated stator core 110 is arranged - in its parts distanced from the poles 111, 112 - with one or a plurality of stator winding 110'.
Figure 5 furthermore represents, in or as part of the sectional plane shown, the rotor 120 of the electric motor; the rotor 120 is located between the poles 111, 112 of the stator core 110.

In a manner conventionally known, the poles 111, 112 comprise (or the laminated stator core 110 comprises) recesses 115 in order to increase the starting torque of the electric motor 100. The recesses 115 form a small asymmetry in the sheet metal section of the laminated stator core 110 which creates an angular shift of the cogging torque with respect to the electrical torque and thus improves (or enables) the start-up of the motor. Especially, such recesses 115 are diametrically opposite to each other (with regard to the axis of rotation 121) and their connecting line (not represented) is offset by an angle with respect to a connecting line (not represented) between the poles 111, 112 via the axis of rotation 121 (indicated, in Figure 5, by means of "0°"). This offset angle (of the central connecting line between the recesses 115 with regard to the connecting line between the poles 111, 112 via the axis of rotation 121) corresponds roughly to about 30 to 45 degrees.

Additionally, Figure 5 represents - likewise in or as part of the sectional plane shown - the first and second parts 131, 132 of the magnetic means support 130 as well as the respective magnetic moments m₁, m₂, schematically shown to be oriented downwardly in the representation of Figure 5.
The poles 111, 112 and the rotor 120 are represented, in Figure 5, along a left-right arrangement, whereas the first and second parts 131, 132 and the rotor 120 are presented, in Figure 5, along a top-down arrangement - i.e. in the sectional plane shown in Figure 5, the central connecting line (not represented) between the first and second parts 131, 132 of the magnetic means support 130 is oriented substantially vertically and the central connecting line (not represented) between the poles 111, 112 is oriented substantially horizontally (indicated, in Figure 5, by means of "0°"), thus an angle is realized between these two connecting lines of substantially 90 degrees.
It is visible from the representation of Figure 5 that the first and second parts 131, 132 of the magnetic means support 130 are radially distanced to the rotor - and, hence, also radially distanced from the rotor permanent magnet (schematically indicated, or represented, in Figure 5, by means of indications "N" and "S" for the two magnetic poles of the rotor permanent magnet).

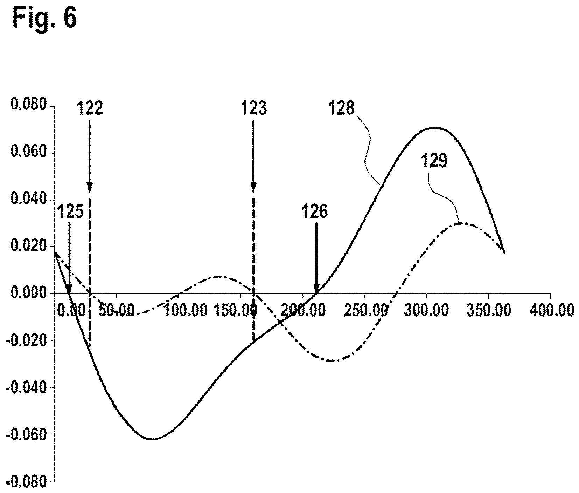

In Figure 6, the evolution of the electrical torque and the evolution of the cogging torque of a motor according to the present invention is schematically represented in dependency of the rotation angle (in degrees on the abscissa) around the axis of rotation 121. The electrical torque - also called strating torque or starting torque - is indicated, in Figure 6, by means of reference sign 128, whereas the cogging torque is indicated by means of reference sign 129. On the ordinate, the respective torque values are indicated (in Nm). As can be seen from the evolution of the cogging torque 129, there is a number of (angular) positions of rest (indicated, in Figure 6, by means of reference signs 122, 123) of the rotor 120 - i.e. at which angular positions of the rotor 120 the cogging torque 129 corresponds to or is almost zero (Nm). Furthermore, as can be seen from the evolution of the electrical torque (or strating torque), there is also a number of (angular) positions of minimum (electrical) torque of the motor (indicated, in Figure 6, by means of reference signs 125, 126) - i.e. at which angular positions of the rotor 120 the electrical (or strating or starting) torque 128 corresponds to or is almost zero (Nm). Preferably according to the present invention, any position of rest 122, 123 of the rotor 120 is angularly distanced from any angular position of minimum torque 125, 126 of the motor 100 by at least 20 degrees, preferably by at least 30 degrees, more preferably by at least 40 degrees. It is thereby advantageously possible to realize a comparatively high electrical starting torque of the motor. Additionally, by means of arranging the first and second parts 131, 132 of the magnetic means support 130 in a symmetrical manner, hence avoiding unbalanced loads, it is furthermore advantageously possible to avoid unsymmetrically distributed magnetic means, and, thus, an increased lifetime of the motor, especially its bearing.

According to the present invention, it is preferred that the absolute value of the first magnetic moment m₁ and of the second magnetic moment m₂ are equal and/or that absolute value of the first and second magnetic moments m₁, m₂ correspond to between 10% and 30% of the magnetic moment of the rotor permanent magnet, preferably between 15% and 25% of the magnetic moment of the rotor permanent magnet.

According to different embodiments of the present invention, the first and second parts 131, 132 are able to be made (themselves) of a magnetic material (i.e. the first and second parts 131, 132 having the respective magnetic moments m₁, m₂, especially the first and second parts 131, 132 are realized of, or comprise, sintered hard ferrite. Hence, the magnetic means support 130 might be a molded part
-- made of a material having magnetic properties or
-- made of a material comprising particles having magnetic properties.
According to other embodiments of the present invention, the magnetic means support 130 comprises, in or as part of its first part 131, a first permanent magnet 131' having the first magnetic moment m₁, and, in or as part of its second part 132, a second permanent magnet 132' having the second magnetic moment m₂. Especially, the first and second permanent magnets 131', 132' and/or the first and second parts 131, 132 are realized of, or comprise, sintered hard ferrite. Hence, the magnetic means support 130 might be a molded part, wherein the first and second permanent magnets 131', 132' are especially arranged as part of the magnetic means support 130 by means of over-molding and/or by means or insert-molding.

Regarding the (magnetic) extension of the first and second parts 131, 132, it is furthermore preferred that the first and second permanent magnets 131', 132' and/or the first and second parts 131, 132 are configured
-- to have a height in axial direction substantially corresponding to the length of the rotor permanent magnet (of the rotor 120) and/or
-- to have a width in angular direction of at most 60 degrees, preferably at most 45 degrees, further preferably at most 30 degrees.

According to further embodiments of the present invention - and alternatively or cumulatively to using two permanent magnets 131', 132' embedded into an overmolded part, i.e. the magnetic means support 130 - it is also possible and preferred, according to the present invention, to provide an auxiliary winding which is powered only during the start-up phase of the motor: According such an embodiment, the magnetic means support 130 comprising, in or as part of its first part 131, a first coil, and, in or as part of its second part 132, a second coil, wherein the motor 100 comprises or is assigned to control means such that the first coil is able to be controlled such as to realize the first magnetic moment m₁ and the second coil is able to be controlled such as to realize the second magnetic moment m₂ (only during the start-up phase of the motor). Again, the magnetic means support 130 might be a molded part, wherein the first and second coils are especially arranged as part of the magnetic means support 130 by means of over-molding and/or by means or insert-molding.

## Claims

1. Single-phase synchronous motor (100) comprising at least one stator winding, a U-shaped laminated stator core (110) with two poles (111, 112) and a rotor (120), the rotor (120) being arranged between the poles (111, 112) and the rotor (120) comprising a rotor permanent magnet,
**characterized in that** the motor (100) comprises a magnetic means support (130), wherein the magnetic means support (130) comprises at least a first part (131) and a second part (132), the first and second part (131, 132) being located between the poles (111, 112), at diametrically opposed locations relative to the axis of rotation (121) of the rotor (120), and radially distanced to the rotor permanent magnet, wherein the first part (131) realizes or is configured to realize a first magnetic moment (m₁) and the second part (132) realizes or is configured to realize a second magnetic moment (m₂), wherein the first and second magnetic moments (m₁, m₂) are oriented parallel to each other.

2. Single-phase synchronous motor (100) according to claim 1, wherein the absolute value of the first magnetic moment (m₁) and of the second magnetic moment (m₂) are equal,
wherein especially the absolute value of the first and second magnetic moments (m₁, m₂) correspond to between 10% and 30% of the magnetic moment of the rotor permanent magnet, preferably between 15% and 25% of the magnetic moment of the rotor permanent magnet.

3. Single-phase synchronous motor (100) according to one of the preceding claims, wherein the magnetic means support (130) comprises, in or as part of its first part (131), a first permanent magnet (131') having the first magnetic moment (m₁), and, in or as part of its second part (132), a second permanent magnet (132') having the second magnetic moment (m₂),
wherein especially the first and second permanent magnets (131', 132') and/or the first and second parts (131, 132) are configured
-- to have a height in axial direction substantially corresponding to the length of the rotor permanent magnet and/or
-- to have a width in angular direction of at most 60 degrees, preferably at most 45 degrees, further preferably at most 30 degrees,
and/or wherein especially the first and second permanent magnets (131', 132') and/or the first and second parts (131, 132) are realized of, or comprise, sintered hard ferrite.

4. Single-phase synchronous motor (100) according to one of the preceding claims, wherein the magnetic means support (130) comprises, in or as part of its first part (131), a first coil, and, in or as part of its second part (132), a second coil, wherein the motor (100) comprises or is assigned to control means such that the first coil is able to be controlled such as to realize the first magnetic moment (m₁) and the second coil is able to be controlled such as to realize the second magnetic moment (m₂).

5. Single-phase synchronous motor (100) according to one of the preceding claims, wherein the magnetic means support (130) is a molded part, wherein the first and second permanent magnets (131', 132') and/or the first and second coils are especially arranged as part of the magnetic means support (130) by means of over-molding and/or by means or insert-molding.

6. Single-phase synchronous motor (100) according to one of the preceding claims, wherein the magnetic means support (130) is a molded part
-- made of a material having magnetic properties or
-- made of a material comprising particles having magnetic properties.

7. Single-phase synchronous motor (100) according to one of the preceding claims, wherein the rotor (120) has, relative to the stator core (110), at least one angular position of minimum torque (125, 126) of the motor (100), wherein the motor (100) is configured such that any position of rest (122, 123) of the rotor (120) is angularly distanced from any such angular position of minimum torque (125, 126) of the motor (100) by at least 20 degrees, preferably by at least 30 degrees, more preferably by at least 40 degrees.

8. Pump (200) comprising a synchronous motor (100) according to one of the preceding claims.
